# EUROPEAN PATENT APPLICATION

(11) **EP 4 174 008 A1**
(43) Date of publication of application: **03.05.2023**
(21) Application number: 20942400.1
(22) Date of filing: 25.06.2020
(51) Int. Cl.: B66B 3/00

(54) **ELEVATOR SYSTEM, AND INSTALLATION METHOD FOR ELEVATOR WIRELESS COMMUNICATION DEVICE**

(71) Applicant: Hitachi, Ltd., Tokyo 100-8280 (JP)
(72) Inventor: SAITO Yuki, Tokyo 101-8941 (JP); KANZAKI Hajime, Tokyo 100-8280 (JP); MATSUMOTO Yohei, Tokyo 101-8941 (JP)
(74) Representative: Mewburn Ellis LLP
(86) International application number: PCT/JP2020/025056
(87) International publication number: WO 2021/260893

(57) **Abstract**

The present invention provides an elevator system which prevents interruption of communication with a wireless communication device installed in a car, while suppressing the cost. The elevator system includes the car ascending/descending in a hoistway, multiple hoistway wireless communication devices installed in the hoistway, and a car wireless communication device installed in the car. The elevator system is configured to allow communication between the hoistway wireless communication device and the car wireless communication device. A spacing between the hoistway wireless communication devices which are installed at positions near a vertical center of the hoistway is smaller than a spacing between the hoistway wireless communication devices which are installed at positions farther from the vertical center.

## Description

### Technical Field

The present invention relates to an elevator system, and an installation method for an elevator wireless communication device.

### Background Art

An elevator having a car ascending/descending in a hoistway is provided with multiple devices for controlling the elevator. Those devices intercommunicate with one another to attain various kinds of control operations.

Accompanied by the recent focus on wireless communication, the technology for improving reliability of the wireless communication has been proposed. For example, PTL 1 discloses a wireless communication system including a wireless communication base station to be installed in a moving body, and multiple wireless communication terminals to be disposed on a moving route of the moving body.

### Citation List

### Patent Literature

PTL 1: Japanese Patent Application Laid-Open No. 2016-127447

### Summary of Invention

### Technical Problem

The technology disclosed in PTL 1 cannot determine specific positions of the multiple wireless communication terminals to be installed in the hoistway. If the spacing between the wireless communication terminals is too large, there may cause the risk that the car is located at the position where communication between the wireless communication terminal and the wireless communication base station installed in the car is interrupted. Generally, since interruption of the communication interferes with normal operations of the elevator, such state has to be avoided. Meanwhile, reduction of the spacing between the wireless communication terminals installed in the hoistway requires more wireless communication terminals, resulting in cost increase. Accordingly, it is preferable to avoid reduction of the spacing more than necessary.

It is an object of the present invention to provide an elevator system configured to prevent interruption of communication with the wireless communication device installed in the car, and an installation method for elevator wireless communication device.

### Solution to Problem

To attain the above-described object, the present invention provides an elevator system including a car ascending/descending in a hoistway, multiple hoistway wireless communication devices installed in the hoistway, and a car wireless communication device installed in the car. The elevator system is configured to allow communication between the hoistway wireless communication device and the car wireless communication device. A spacing between the hoistway wireless communication devices which are installed at positions near a vertical center of the hoistway is smaller than a spacing between the hoistway wireless communication devices which are installed at positions farther from the vertical center.

### Advantageous Effects of Invention

The present invention provides the elevator system configured to prevent interruption of communication with the wireless communication device installed in the car, and the installation method for elevator wireless communication device.

### Brief Description of Drawings

Figure 1 is an overall structural view of an elevator system according to an example of the present invention.
Figure 2 represents establishment of a wireless communication link in descending of a car of the elevator system according to the example of the present invention.
Figure 3 represents establishment of a wireless communication link in ascending of the car of the elevator system according to the example of the present invention.
Figure 4 illustrates a screen that displays a calculation tool for providing an installation position of a hoistway wireless communication terminal according to an example of the present invention.
Figure 5 shows graphs which represent the time taken from descending of the car according to the example of the present invention from the uppermost floor until it reaches the lowermost floor and the descending speed, and a relationship between the time and position.

### Description of Embodiment

An example of the present invention will be described referring to the drawings.

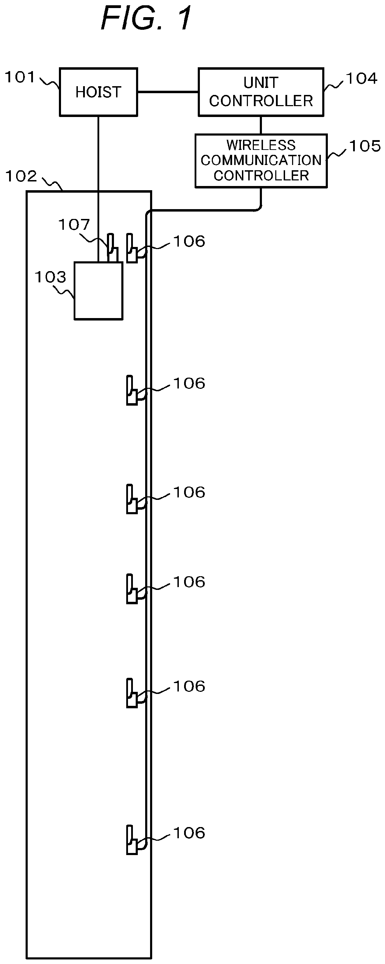

Figure 1 is an overall structural view of an elevator system according to an example of the present invention. In the elevator system according to the example, a hoist 101 is rotatably driven to move a car 103 up/down inside a hoistway 102.

The operation of the hoist 101 is controlled by a unit controller 104. The unit controller 104 locates the position of the car 103 based on a signal received from an encoder installed in the hoist 101.

The unit controller 104 is connected to a hoistway wireless communication device 106 via a wireless communication controller 105. The hoistway wireless communication device 106 wirelessly communicates with a car wireless communication device 107 installed in the car.

Each radio coverage range of the hoistway wireless communication device 106 and the car wireless communication device 107 is limited. If the distance between the terminals exceeds a predetermined value (communicable distance), communication is interrupted. The communicable distance between the hoistway wireless communication device 106 and the car wireless communication device 107 may vary depending on such environment as the hoistway. In the hoistway formed of glass, the radio wave is more likely to leak than in the concrete hoistway. This may cause difficulty in transmission of radio wave, resulting in increased communicable distance.

The elevator system according to the example of the present invention includes multiple hoistway wireless communication devices 106 inside the hoistway 102 so that any one of the hoistway wireless communication devices 106 is communicable with the car wireless communication device 107 whichever position the car 103 is located. The communication link (the state which allows communication between terminals) of the car wireless communication device 107 can be established to the multiple hoistway wireless communication devices 106 simultaneously.

As described above, the unit controller 104 is configured to have the position of the car 103 kept informed, and gives the wireless communication controller 105 a communication link start command to the specific hoistway wireless communication device 106 depending on the informed position. The wireless communication controller 105 transmits a communication check signal from the hoistway wireless communication device 106 which has received the communication link start command to the car wireless communication device 107. Upon reception of the communication check signal, the car wireless communication device 107 transmits a reply signal to the hoistway wireless communication device 106. Reception of the reply signal of the terminal by the hoistway wireless communication device 106 establishes the communication link. The time taken for the unit controller 104 to establish the communication link from giving of the communication link start command to the communication controller 105 is called a communication link establishing time. In the elevator system according to the example of the present invention, the communication link establishing time is uniquely determined by the model of the wireless communication device to be used.

During establishment of the communication link, the wireless communication controller 105 transmits the communication check signal from the hoistway wireless communication device 106 on a sufficiently short period on the regular basis to confirm reception of the reply signal. If no reception of the reply signal is confirmed, the communication link is cut off.

The wireless communication controller 105 transmits the signal received from the unit controller 104 from the communication-linked hoistway wireless communication device 106 to the car wireless communication device 107. The signal contains a command to open/close a door of the car 103, for example. The unit controller 104 transmits the signal to allow opening or closing of the door of the car 103.

The wireless communication controller 105 transmits the signal which has been received by the communication-linked hoistway wireless communication device 106 from the car wireless communication device 107 to the unit controller 104. The signal contains registration information of a destination floor button of the car 103, for example. The unit controller 104 receives such signal to determine the specific floor to which the car 103 is moved.

The signal received by the hoistway wireless communication device 106 from the car wireless communication device 107 contains information on a door open/close state of the car 103. If the door of the car 103 is accidentally opened in ascending/descending, the unit controller 104 detects the opening of the door from the signal. The unit controller 104 then stops driving the hoist 101 immediately to suspend movement of the car 103 for protecting the safety of occupants. From the perspective of safety, establishment of the communication link between any one of the hoistway wireless communication devices 106 and the car wireless communication device 107 has to be kept constantly so as not to interrupt the communication between the hoistway wireless communication device 106 and the car wireless communication device 107.

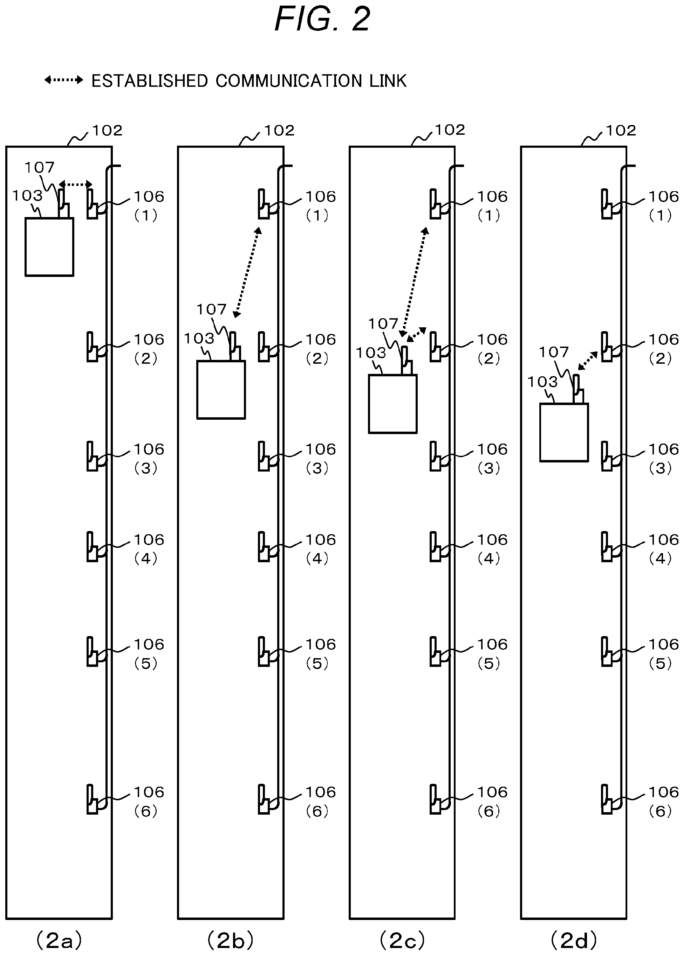

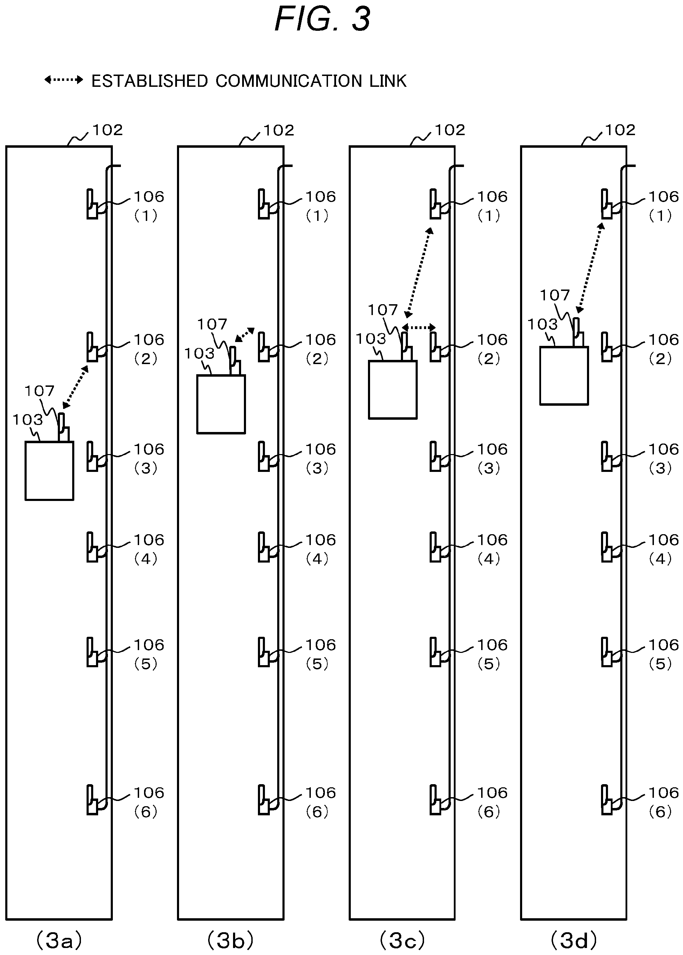

A specific example with respect to establishment of the wireless communication link will be described referring to Figures 2 and 3.

Figure 2 represents the wireless communication link to be established as the car 103 is descending from the uppermost floor in the elevator system according to the example of the present invention. The drawing omits the hoist 101, the unit controller 104, and the wireless communication controller 105 for simplification. For convenience of explanation, the hoistway wireless communication devices 106 are distinguished by consecutive numbers each in parenthesis, for example, 106(1), 106(2), and the like from the uppermost installation position in the descending order.

Figure (2a) represents that the car 103 is on the uppermost floor, and the communication link of the car wireless communication device 107 is established only to the hoistway wireless communication device 106(1). It is to be noted that in the elevator system according to the example of the present invention, because of the installation position of the car wireless communication device 107, it is structurally impossible to establish the communication link of the car wireless communication device 107 to the hoistway wireless communication devices 106 at the height lower than the car wireless communication device 107.

Figure (2b) represents the state where the car 103 is descending. The unit controller 104 preliminarily receives the information on the position of the car 103 which enables communication between the hoistway wireless communication device 106(2) and the car wireless communication device 107. When the encoder detects that the car 103 has reached the informed position, the unit controller 104 gives the wireless communication controller 105 the communication link start command to the hoistway wireless communication device 106(2) such that the communication check signal is transmitted from the hoistway wireless communication device 106(2) to the car wireless communication device 107.

When the hoistway wireless communication device (2) receives the reply signal from the car wireless communication device 107, the communication link between the car wireless communication device 107 and the hoistway wireless communication device 106(2) is established. Referring to Figure (2c), the car 103 is positioned at the height lower than the car 103 (Figure (2b)) positioned when the unit controller 104 has given the communication link start command by the descending distance in the communication link establishing time. At this time point, the communication link between the car wireless communication device 107 and the hoistway wireless communication device 106(1) has been kept established.

Referring to Figure (2d), as the car 103 further descends, the radio wave transmitted from the hoistway wireless communication device 106(1) no longer reaches the car wireless communication device 107 to cut off the communication link between the hoistway wireless communication device 106(1) and the car wireless communication device 107. The communication link established between the car wireless communication device 107 and the hoistway wireless communication device 106(2) allows signal communication between the car 103 and the unit controller 104.

Figure 3 represents the wireless communication link established when the car 103 is ascending in the elevator system according to the example of the present invention.

Figure (3a) represents that the communication link of the car wireless communication device 107 is established only to the hoistway wireless communication device 106(2).

When the car 103 is positioned as illustrated in Figure (3b), the unit controller 104 gives the wireless communication controller 105 the communication link start command to the hoistway wireless communication device 106(1) .

When the car 103 is positioned as illustrated in Figure (3c), the communication link is established between the car wireless communication device 107 and the hoistway wireless communication device 106(1). Similarly to the descending case, the car 103 is positioned at the height higher than the car 103 (Figure (3b)) when the unit controller 104 has given the communication link start command by the ascending distance in the communication link establishing time.

When the car 103 reaches the position as illustrated in Figure (3d), the communication link between the hoistway wireless communication device 106(2) and the car wireless communication device 107 is cut off.

As described above, in the elevator system according to the example of the present invention, before the communication link between the car wireless communication device 107 and one of the hoistway wireless communication devices 106 is cut off, the communication link of the car wireless communication device 107 is established to the next hoistway wireless communication device 106 in the ascending direction of the car 103 to prevent interruption of the communication. The number of the hoistway wireless communication devices 106 to be installed and positions of those devices are essential factors for the above-configured system. If the number of the hoistway wireless communication devices 106 is insufficient, there may cause the timing, while the car is ascending or descending, at which no communication link is established between any one of the hoistway wireless communication devices 106 and the car wireless communication device 107. The inappropriate installation position may also cause the timing as described above. Especially, the movement distance of the car 103 in the communication link establishing time has to be taken into account.

This problem may be avoided by installing many hoistway wireless communication devices 106 in sufficiently close arrangement. It is preferable, however, to avoid installation of excessive number of hoistway wireless communication devices 106 for suppressing the cost.

Explanations will be made about the specific method for providing the required number of the hoistway wireless communication devices 106, and appropriate installation positions of those devices.

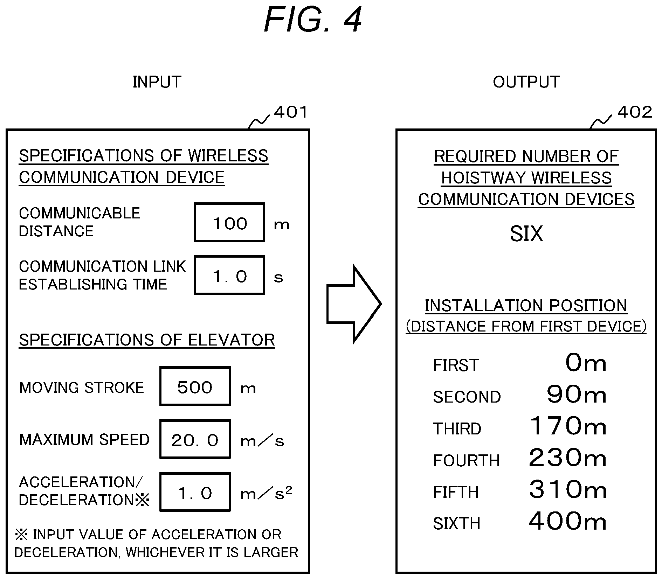

Figure 4 illustrates a screen that displays the calculation tool for providing the installation position of the hoistway wireless communication device 106 according to the example of the present invention. Upon reception of inputs of various values through an input screen 401, the tool calculates the required number of the hoistway wireless communication devices 106, and installation positions of those devices using the method to be described later, and gives the calculated results to an output screen 402.

The input screen 401 receives inputs of first information about specifications of wireless communication devices (the hoistway wireless communication device 106 and the car wireless communication device 107), and second information about specifications of the elevator. The first information contains the communicable distance and the communication link establishing time. The second information contains a movement stroke (distance between the uppermost floor and the lowermost floor), the maximum speed (rated speed) of the car 103, and acceleration/deceleration (in the case of difference in the value between acceleration and deceleration, the value whichever it is larger). Generally, the maximum speed or the acceleration/deceleration may be set to a larger value as the movement stroke becomes greater. Even in the case of difference in the value between acceleration and deceleration of the car 103, the acceleration in ascending of the car 10 is equivalent to the deceleration in descending, and the deceleration in ascending of the car 10 is equivalent to the acceleration in descending.

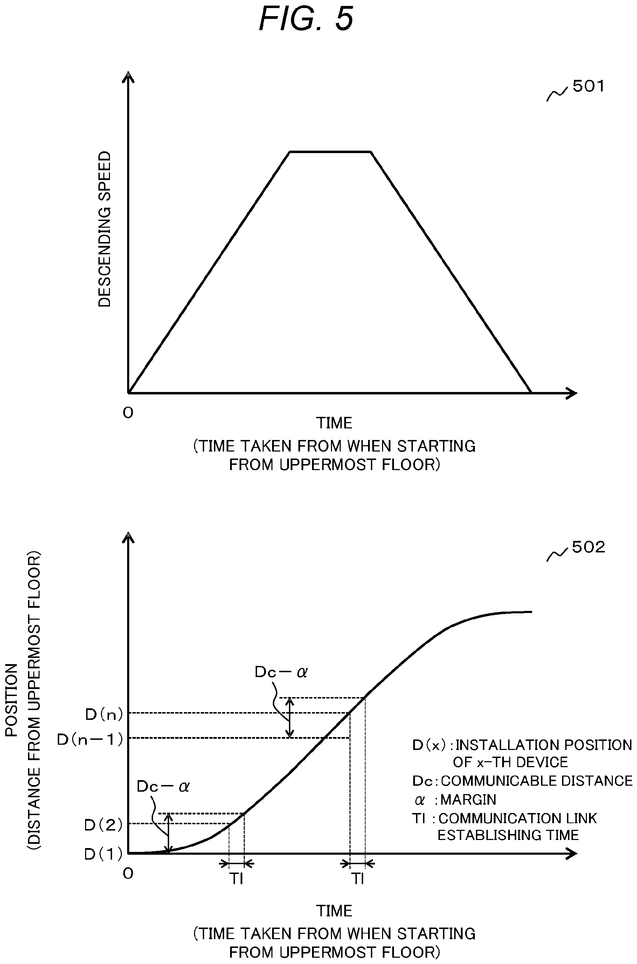

Referring to Figure 5, explanations will be made about the method for calculating the required number of the hoistway wireless communication devices 106, and installation positions of those devices based on the input information.

Figure 5 shows a graph 501 representing the time from when the car 103 according to the example of the present invention has started descending from the uppermost floor until it reaches the lowermost floor and the descending speed, and a graph 502 representing the relationship between the time and the position.

The graph 501 is defined by the movement stroke, the maximum speed of the car 103, and the acceleration/deceleration. The graph 502 is defined by the time integration of the descending speed.

The explanation will be made about the method for calculating the required number of the hoistway wireless communication devices 106, and installation positions of those devices based on the communicable distance and the communication link establishing time in reference to the graph 502.

An installation position D(1) of the first hoistway wireless communication device 106 from the top has the same height as that of the car wireless communication device 107 when the car 103 is on the uppermost floor. This position is defined as zero. The graph 502 indicates the time for which the car 103 has descended from the position D(1) to the position apart therefrom by the distance obtained by subtracting a margin α (margin α is to be a predetermined fixed value) from the communicable distance Dc. The graph further indicates the position of the car 103 before the elapse of the communication link establishing time T1. This position becomes an installation position D(2) of the second hoistway wireless communication device.

Similarly, the installation position D(n) of the nth (n is a natural number equal to or larger than 2) hoistway wireless communication device 106 from the top corresponds to the car position at the time obtained by subtracting TI from the time for which the car has been descending to reach the position D(n-1)+Dc-α. As described above, values of D(n) are sequentially calculated. When the value of the D(n-1)+Dc-α exceeds the movement stroke, the calculation is stopped.

In the foregoing manner, the installation position of the hoistway wireless communication device 106 is calculated, and at the same time, the required number of those devices are defined.

The hoistway wireless communication devices 106 are installed at the calculated positions, respectively to establish the communication link to the nth hoistway wireless communication device 106 at the position before the margin α from the position (D(n-1)+Dc) at which the communication link to the (n-1)th hoistway wireless communication device 106 from the top is cut off. Accordingly, it is possible to constantly keep establishment of the communication link between any one of the hoistway wireless communication devices 106 and the car wireless communication device 107.

If the value of acceleration is equivalent to that of deceleration, that is, the descending speed and the ascending speed of the car 103 at each position coincide with each other, the respective values of movement distance of the car 103 coincide in the communication link establishing time.

In the case of difference in the value between acceleration and deceleration, it is assumed that the larger value is set. On the assumption as described above, the descending speed of the car 103 is equal to or higher than the actual descending speed, and equal to or higher than the ascending speed at all positions. The movement distance of the car 103 in the communication link establishing time becomes equal to or greater than the actual value.

In the above-described case, the required number of the hoistway wireless communication devices 106 and the installation positions of those devices are calculated on the assumption that the car 103 is descending. Installation of the hoistway wireless communication devices 106 at the above-described positions allows communication link to be kept established constantly between any one of the hoistway wireless communication devices 106 and the car wireless communication device 107 when the car is ascending. At the position D(n-1) + Dc, the unit controller 104 is allowed to give the wireless communication controller 105 the communication link start command to the (n-1)th hoistway wireless communication device 106.

Specific values of the required number of hoistway wireless communication devices 106, and appropriate installation positions of those devices are provided as described above. In the present invention, considering the movement distance of the car 103 in the communication link establishing time, the installation position of the hoistway wireless communication device 106 is determined. The movement speed of the car 103 at the position near the center of the hoistway becomes higher than the movement speed during acceleration or deceleration, that is, at the position near the upper end or the lower end of the hoistway. This increases the movement distance of the car 103 in the communication link establishing time. As a result, the spacing between the hoistway wireless communication devices 106 at the position near the vertical center of the hoistway is shorter than the spacing at the position farther from the vertical center of the hoistway.

The present invention is not limited to the example as described above, but includes various modifications. For example, the example has been described in detail for readily understanding of the present invention which is not necessarily limited to the one equipped with all structures as described above. It is possible to add, remove, and replace the other structure to, from and with a part of the structure of the example.

It is possible to determine as to establishment of the communication link by reception of a beacon signal by the hoistway wireless communication device 106 from the car wireless communication device 107 instead of using the communication link start command given by the unit controller 104.

The required number of the hoistway wireless communication devices 106 and the installation positions of those devices may be derived from the relationship between the movement speed of the car 103 and the time or position instead of using the maximum speed and acceleration/deceleration of the car 103.

### Reference Signs List

- 101: hoist,
- 102: hoistway,
- 103: car,
- 104: unit controller,
- 105: wireless communication controller,
- 106: hoistway wireless communication device,
- 107: car wireless communication device,
- 401: input screen,
- 402: output screen

## Claims

1. An elevator system comprising a car ascending/descending in a hoistway, multiple hoistway wireless communication devices installed in the hoistway, and a car wireless communication device installed in the car, the elevator system being configured to allow communication between the hoistway wireless communication device and the car wireless communication device,
wherein a spacing between the hoistway wireless communication devices which are installed at positions near a vertical center of the hoistway is smaller than a spacing between the hoistway wireless communication devices which are installed at positions farther from the vertical center.

2. The elevator system according to claim 1,
wherein an installation position of the hoistway wireless communication device is determined by ascending/descending speed of the car at each position in the hoistway.

3. An installation method for an elevator wireless communication device having multiple hoistway wireless communication devices for communication with a car wireless communication device installed in a car,
wherein the hoistway wireless communication devices are installed such that a spacing between the hoistway wireless communication devices which are installed at positions near a vertical center of the hoistway is smaller than a spacing between the hoistway wireless communication devices which are installed at positions farther from the vertical center of the hoistway.

4. The installation method for elevator wireless communication device according to claim 3, comprising the steps of:
receiving inputs of first information relating to specifications of the hoistway wireless communication device and the car wireless communication device, and second information relating to specifications of an elevator; and
outputting the required number of the hoistway wireless communication devices and installation positions of the devices based on the first information and the second information.

5. The installation method for elevator wireless communication device according to claim 4,
wherein the first information contains a communicable distance which allows communication between the hoistway wireless communication device and the car wireless communication device, and time taken for establishing a communication link of the hoistway wireless communication device to the car wireless communication device; and
the second information contains a movement stroke, maximum speed of the car, and acceleration or deceleration of the car.
